# FASCICULE DE BREVET EUROPEEN

(11) **EP 3 529 549 B1**
(45) Date de publication et mention de la délivrance du brevet: **14.06.2023**
(21) Numéro de dépôt: 17804603.3
(22) Date de dépôt: 20.10.2017
(51) Int. Cl.: F28F 1/22

(54) **DISPOSITIF POUR ACCUMULATEUR THERMIQUE A PRISE EN GLACE**
EISBASIERTE THERMISCHE ENERGIESPEICHERVORRICHTUNG
ICE-BASED THERMAL ENERGY STORAGE DEVICE

(30) Priorité: 20.10.2016 FR 1670616; 30.03.2017 FR 1752675
(43) Date de publication de la demande: 28.08.2019
(73) Titulaire: BOREALES ENERGY, 14200 Hérouville-Saint-Clair (FR)
(72) Inventeur: OUVRY, Patrick, 14920 Mathieu (FR)
(74) Mandataire: Cabinet Chaillot
(86) Numéro de dépôt international: PCT/FR2017/052899
(87) Numéro de publication internationale: WO 2018/073552

(56) Documents cités:
- EP-A1- 1 236 960
- WO-A1-03/027596
- WO-A1-2012/142070
- LU-A1- 30 780
- US-A- 5 186 022

## Description

L'invention concerne le domaine technique des échangeurs thermiques et notamment des accumulateurs thermiques qui transfèrent de la chaleur entre un fluide frigorigène et un matériau externe à changement de phase ou à prise en glace, comme un mélange d'eau et de glace à 0°C, via un matériau conducteur pour la chaleur, comme un métal, séparant le fluide frigorigène et le matériau à changement de phase. Deux paramètres significatifs du coût d'un échangeur de ce type sont le volume de matériau conducteur pour la chaleur et le volume de fluide frigorigène utilisés, rapportés à l'énergie stockée.

L'art antérieur connaît deux grandes familles d'accumulateurs thermiques par changement de phase :
- tubulaires : ces accumulateurs sont constitués d'une multitude de tubes creux sur leur longueur et parallèles entre eux, chaque tube étant rempli d'un fluide frigorigène sous pression et en contact externe avec un milieu à faire prendre en glace. De tels tubes sont majoritairement réalisés dans un matériau conducteur pour la chaleur, typiquement en métal, notamment l'acier, l'aluminium et plus rarement le cuivre. Certains accumulateurs tubulaires sont constitués de tubes en plastique. En dépit d'une résistance thermique du plastique plus importante que celle des métaux leur coût moindre permet de compenser ce handicap par de plus grandes surfaces d'échange. Une variante de ces accumulateurs consiste en un seul tube très long, disposé en spirale ou en hélice ou en serpentin.
   Une variante de ces accumulateurs consiste à faire circuler dans les tubes un fluide frigoporteur, typiquement de l'eau glycolée, au lieu du fluide frigorigène.
- plans : ces accumulateurs sont constitués d'une multitude d'échangeurs plans, parallèles les uns par rapport aux autres. Ces échangeurs sont eux-mêmes constitués de 2 plaques métalliques planes de faible épaisseur, réunies hermétiquement par leur bord et soudées l'une à l'autre par points, disposés à intervalles réguliers selon une répartition matricielle (en lignes et colonnes), lorsque l'on observe les plaques sur leur plus grande face. Lors de la fabrication de ces échangeurs, un volume interne est créé par l'injection d'un fluide, gaz ou liquide, sous haute pression jusqu'à déformation définitive des plaques, conférant aux plaques un aspect de coussin d'où leur appellation « échangeur coussin » (« pillow plate » en anglais).

Le volume interne de chaque échangeur est rempli de fluide frigorigène sous pression et la surface externe de chaque échangeur est en contact avec un milieu à refroidir jusqu'à la prise en glace.

De tels échangeurs en coussin sont composés de feuilles réalisées dans un matériau conducteur pour la chaleur, typiquement un métal, notamment de l'acier (généralement inoxydable) et de l'aluminium.

Certains accumulateurs plans sont en plastique, à nouveau avec une résistance thermique du plastique plus importante que celle des métaux mais à un coût moindre qui permet de compenser ce handicap par de plus grandes surfaces d'échange.

Une variante de ces accumulateurs consiste aussi à faire circuler dans les échangeurs un fluide frigoporteur, typiquement de l'eau glycolée, au lieu du fluide frigorigène.

Le fonctionnement de ces accumulateurs thermiques à changement de phase, tubulaires ou plans, consiste à emmagasiner du froid comme suit :
- production de frigories par l'évaporation du fluide frigorigène contenu dans le volume interne de chaque échangeur
- initialement : transport des frigories au travers du matériau de l'échangeur jusqu'au contact du matériau à changement de phase liquide,
- puis plus tard : transport des frigories au travers du matériau de l'échangeur et de l'épaisseur de glace jusqu'au contact du matériau à changement de phase encore liquide
- solidification du matériau à changement de phase encore liquide qui est au contact de la glace par transfert des frigories de la glace au matériau.

Une des caractéristiques communes à tous les accumulateurs thermiques est que la température d'évaporation du fluide frigorigène descend au fur et à mesure que l'épaisseur de glace augmente. En effet, la croissance de l'épaisseur de glace au fil du temps induit une augmentation de la résistance thermique, qui s'oppose à l'écoulement des frigories entre le fluide frigorigène et le matériau à changement de phase encore liquide. Pour combattre cette résistance, à puissance constante d'échange thermique, le fluide frigorigène abaisse naturellement sa température d'évaporation au fil du temps.

Dans l'art antérieur, on observe un comportement très différent des accumulateurs thermiques tubulaires par rapport aux accumulateurs thermiques plans ou à plaques, ce qui conduit à de grosses différences sur le plan énergétique :
- accumulateurs tubulaires : le froid généré au sein de l'échangeur par l'évaporation du fluide frigorigène provoque une prise en glace isotrope c'est-à-dire que la croissance de la glace est concentrique aux tubes ou perpendiculaire à leur longueur ou radiale aux tubes. Cette caractéristique isotropique de la conduction induit une baisse de la température d'évaporation du fluide frigorigène en fonction du temps avec une forte pente, de l'ordre de 2°C/heure.
- accumulateurs plans : le froid généré au sein de l'échangeur par l'évaporation du fluide frigorigène provoque une prise en glace normale ou perpendiculaire aux deux surfaces externes. Cette caractéristique induit une baisse de la température d'évaporation du fluide frigorigène en fonction du temps avec une très faible pente, de l'ordre de 0,3°C/h, soit de l'ordre de 7 fois moins que les accumulateurs tubulaires.

L'étude du comportement d'un accumulateur tubulaire et d'un accumulateur plan, dont les échangeurs sont fabriqués avec la même quantité de matière thermiquement conductrice, conduit au bilan suivant:
La valeur « dT », représentant l'écart de température entre le fluide frigorigène, en ébullition au sein d'un accumulateur thermique fonctionnant à puissance thermique constante, et la température de changement de phase d'un matériau à changement de phase, vaut au terme d'un fonctionnement de 4h30:
- accumulateur tubulaire : dT = 9,4°C
- accumulateur plan : dT = 1,4°C .

Or, il est communément admis par la profession qu'un gain de 1°C sur la température d'évaporation d'une machine frigorifique correspond à une augmentation de son efficacité énergétique de 2,5 à 3%. Dans le cas présent, la différence de 8°C correspond à une différence de 20 à 24% en termes d'efficacité énergétique.

Mais cette forte amélioration de l'efficacité énergétique a un coût : les accumulateurs plans sont plus chers à produire (très grandes longueurs de soudure) et nécessitent un volume important de fluide frigorigène.

Il existe donc un besoin non satisfait dans l'art antérieur d'un dispositif pour échangeur thermique, conférant un rendement thermodynamique proche de celui des échangeurs plans, utilisant un volume de fluide frigorigène proche ou inférieur à celui des échangeurs à tubes, à volume de matériau thermiquement conducteur identique, et dont les longueurs de soudure sont proches ou inférieures à celles des échangeurs à tubes.

Par ailleurs, l'art antérieur connaît des tubes à ailettes ou radiateurs, pour évacuer par des ailettes, la chaleur produite par des tubes remplis d'un fluide caloporteur et baignant dans l'air, par convection dans l'air. Toutefois, les ailettes de ces tubes sont utilisées dans l'art antérieur pour éloigner au maximum la chaleur d'un tube. De là, les ailettes ne sont pas considérées adaptées à une utilisation avec des matrices de tubes, qui sont rapprochés nécessairement au maximum dans un accumulateur thermique. En effet, la chaleur éloignée par les ailettes est présumée communiquée aux ailettes et tubes voisins, ce qui diminue alors l'efficacité de l'ensemble dans sa fonction de radiateur.

D'une façon générale, il existe dans l'art antérieur un préjugé défavorable à l'utilisation d'ailettes dans un accumulateur thermique, y compris à prise en glace, la fonction thermique des ailettes pour éloigner la chaleur des tubes étant incompatible avec le rapprochement des tubes nécessaire dans un accumulateur thermique pour maximiser la prise en glace dans un volume de coque donné de l'accumulateur thermique.

Les documents brevets WO2012142070 A1, WO03/027596A1, US5186022A, LU30780A1 et EP1236960A1 divulguent des dispositifs échangeurs de chaleur selon l'état de la technique. EP-A-1236960 divulgue un dispositif selon le préambule de la revendication 1.

Dans ce contexte, l'invention est un dispositif pour échanger de la chaleur de type accumulateur thermique selon la revendication 1.

Dans des variantes du dispositif :
- l'épaisseur de l'ailette est inférieure à la largeur du premier tube et est inférieure à la largeur du second tube.
- l'ailette est plane.
- le premier tube est parallèle au second tube
- le premier tube est droit sur sa longueur et le second tube est droit sur sa longueur.
- le premier tube est en aluminium, le second tube est en aluminium et l'ailette est en aluminium.
- la seconde demi-ailette s'étend en largeur entre la première demi-ailette et le second tube.
- le premier bord de la première demi-ailette est en contact avec le second bord de la seconde demi-ailette.

L'invention concerne aussi un procédé comprenant les étapes suivantes :
- évaporer dans un premier tube et dans un second tube, un fluide frigorigène,
- solidifier sur le premier tube, sur le second tube et sur une ailette s'étendant entre le premier tube et le second tube, un matériau liquide.

Dans une variante du procédé, le matériau liquide est une eau et le fluide frigorigène a une température d'évaporation inférieure à la température de prise en glace de l'eau.

Les différents modes de réalisation de l'invention sont décrits pour les références à des numéros entre parenthèses, en lien avec une liste de figures fournie avec la présente demande, dans laquelle :
La figure 1 représente un dispositif qui n'est pas conforme à l'invention avec une ailette continue joignant deux tubes creux.
La figure 2 représente un dispositif selon l'invention avec une ailette discontinue entre les deux tubes creux, composée de deux demi-ailettes s'étendant entre les tubes.

Dans un exemple, un accumulateur thermique est constitué par des tubes disposés parallèlement dans un plan. Une ailette plane d'épaisseur faible devant la largeur des tubes, qui est leur diamètre pour des tubes cylindriques de révolution, est disposée entre les tubes dans le plan des tubes. Les tubes et l'ailette sont disposés dans une coque contenant de l'eau à pression atmosphérique. Un fluide frigorigène qui est, par exemple un fluide frigorigène de type R134a, dont la température d'évaporation est inférieure à la température de prise en glace de l'eau soit 273°Kelvin, dans une gamme de pression donnée, est mis en circulation par une machine frigorifique comprenant un compresseur, apte à fonctionner dans cette gamme de pression.

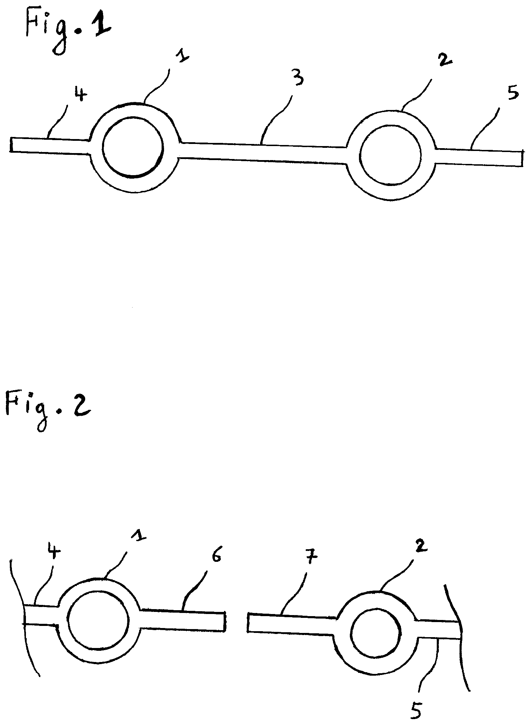

La figure 1 représente ainsi une partie caractéristique de l'accumulateur thermique ci-dessus dans laquelle un premier tube (1) et un second tube (2) sont reliés selon leur longueur par une ailette(3) plane continue qui s'étend sur toute la largeur entre le premier tube(1) et le second tube (2).

Le premier tube(1), le second tube(2) et l'ailette(3) sont par exemple en aluminium ou dans un matériau conducteur pour la chaleur et permettant d'obtenir par extrusion une pièce moulée d'une seule pièce et homogène incluant le premier tube(1), le second tube (2) et l'ailette(3) dans un ensemble continu.

De préférence, le premier tube(1) et le second tube(2) sont de même longueur, de même largeur et de même épaisseur et sont cylindriques et de révolution autour d'un premier axe pour le premier tube(1) et d'un second axe pour le second tube(2).

L'ailette est de préférence d'épaisseur minimale permise par le procédé d'extrusion, c'est-à-dire entre 1 mm et 1,5 mm, mais elle est aussi d'épaisseur inférieure à la largeur ou diamètre des tubes et de préférence de l'ordre de l'épaisseur des tubes, ici 1,5mm. Elle est aussi de largeur égale à la distance entre les tubes et cette distance entre les tubes est choisie supérieure à dix fois la largeur d'un tube. Par exemple, une largeur des tubes de 8mm et une épaisseur des tubes de 1,5mm, peuvent être choisies et une distance entre les axes des tubes de 100mm, donnant une largeur d'ailette de 92mm.

Dans tous les cas, un critère de l'invention peut être vérifié pour une géométrie quelconque de tubes et d'ailette. Ce critère peut être obtenu expérimentalement en introduisant le dispositif selon l'invention dans un accumulateur thermique et en traçant en fonction du temps à puissance frigorifique constante, la dérive de la température d'évaporation du fluide frigorigène dans l'accumulateur ou « dT » comme indiqué précédemment. Par exemple, un manomètre peut être utilisé de façon classique et la température du fluide, comme le R134a déduite par la courbe de la pression de vapeur saturante en fonction de la température du mélange.

Pour un système selon l'invention, on constate que la courbe représentant le « dT » en fonction du temps, possède une pente très proche de celle des échangeurs plans et donc très différente de la pente des échangeurs à tubes.

Le système selon l'invention fonctionne donc non pas comme un système à tubes mais comme un système à plaques du point de vue de la prise en glace. On en déduit que le système selon l'invention permet une prise en glace anisotrope, à la manière des échangeurs plans, tout en permettant d'utiliser un volume de fluide frigorigène très inférieur à celui d'un système à tubes et a fortiori du volume de fluide frigorigène d'un échangeur plan.

Plusieurs variantes du système de la figure 1 peuvent être envisagées, notamment l'ailette peut être de forme différente d'un plan, en dehors du plan des axes des tubes, les tubes peuvent être non strictement parallèles et peuvent être droits ou rectilignes ou incurvés selon différentes formes sur leur longueur, de section circulaire ou elliptique ou même rectangulaire.

Le matériau des tubes et de l'ailette peut être un matériau conducteur pour la chaleur, autre que l'aluminium, comme un métal, notamment de l'acier inoxydable ou du cuivre.

On privilégiera les variantes utilisant le moins de matériau et le moins de fluide frigorigène, tout en continuant à fonctionner comme un système à plaques, du point de vue de la dérive de la température d'évaporation au fil de la prise en glace.

L'ailette reliant thermiquement les tubes change leur comportement lors d'une prise en glace et permet de mettre un nombre de tubes faibles pour recréer thermiquement le fonctionnement d'une plaque.

Par ailleurs, de façon pratique, le premier tube(1) dispose de façon diamétralement opposée à l'ailette(3) dans le plan des tubes, d'une troisième demi-ailette (4), de même épaisseur que l'ailette(3) et de largeur par exemple égale à la moitié de la largeur de l'ailette(3).

De même, le second tube(2) dispose de façon diamétralement opposée à l'ailette(3) dans le plan des tubes, d'une quatrième demi-ailette (5), de même épaisseur que l'ailette(3) et de largeur par exemple égale à la moitié de la largeur de l'ailette(3).

Dans un mode de réalisation de l'invention, l'ailette est réalisée de façon discontinue entre le premier tube (1) et le second tube (2) sous la forme d'une ailette coupée en deux demi-ailettes selon sa longueur : une première demi-ailette (6) partant du premier tube(1) jusqu'à un premier bord et une seconde demi-ailette(7) partant du second tube (2) jusqu'à un second bord.

La découpe de l'ailette en deux demi-ailettes peut être faite selon un bord de forme quelconque sans sortir de l'enseignement de la présente demande. Toutefois, une forme des bords droite est particulièrement avantageuse. En effet, la structure de l'invention dans ce deuxième mode peut être réalisée à partir d'une seule pièce extrudée comprenant un tube central et deux demi-ailettes latérales dans un même plan. Il est ainsi possible de réaliser le dispositif illustré sur la figure 2 en prenant deux de ces pièces extrudées et en rendant leurs tubes parallèles et leurs ailettes coplanaires dans le plan des tubes.

Lorsque les bords en regard de demi-ailettes se touchent mécaniquement, on obtient ainsi l'équivalent thermique d'une pièce extrudée de largeur égale à celle d'une pièce multipliée par le nombre de pièces utilisées.

Lorsque les bords en regard sont éloignés, on obtient une prise en glace entre les bords et un fonctionnement quasiment inchangé par rapport aux plaques jointives.

En dehors d'un régime transitoire pour le premier mode et le second mode, le flux de frigories au milieu de l'ailette(3) est nul et le flux de frigories entre la première demi-ailette(6) et la deuxième ou seconde demi-ailette(7) est nul.

On observe par comparaison avec les accumulateurs existants, les caractéristiques suivantes du présent second mode de réalisation, pour des bords en regard jointifs.

| Type Accumulateur | Tubulaire | Plan | Second mode de réalisation | Unités |
|---|---|---|---|---|
| « dT » à 4h30 | 9,4 | 1,4 | 2,9 | °C |
| Longueur des soudures | 5 | 10 | 1 | mètre |
| Quantité de fluide | 2 | 4 | 0,4 | litre |
| Tenue en pression | 50 | 10 | 50 | Bar |

De façon synthétique, il ressort que l'accumulateur selon le second mode décrit est le moins coûteux des 3 à fabriquer (5 à 10 fois moins de soudure), qu'il est également le moins coûteux à l'usage (énergétiquement sobre et requiert 5 à 10 fois moins de fluide frigorigène que les deux autres techniques), pour une tenue en pression égale ou supérieure aux deux autres. Pour obtenir ce tableau comparatif, les hypothèses de modélisation et de simulation, sont les suivantes :
- puissance thermique équivalente pour les trois types d'accumulateur.
- quantités de matière thermiquement conductrice pour la chaleur, identiques pour les trois types d'accumulateur.

L'homme du métier pourra par de simples opérations d'exécution ou par l'application du critère du « dT » proposé dans le premier mode de réalisation et dans le second mode de réalisation, vérifier pour une structure de ces premier et deuxième modes, si le comportement de la structure géométrique sélectionnée est bien d'un comportement thermique analogue à une plaque en coussin ou plaque.

Notamment, pour une structure fonctionnant selon l'invention, la courbe de l'évolution du « dT » en fonction du temps ou dans le temps, présentera une pente très proche de la même courbe tracée pour un échangeur plan, avec un décalage quasiment constant. Ce décalage sera de l'ordre de 1,5°C au bout de 4h30.

Sur le dispositif de la figure 2, la troisième demi-ailette (4) est diamétralement opposée sur le premier tube (1) à la première demi-ailette (6) et la quatrième demi-ailette (5) est diamétralement opposée sur le second tube (2) à la deuxième demi-ailette (7). On constate bien que de cette façon, ce mode peut être obtenu en disposant de façon fixe mécaniquement dans le même plan, deux pièces extrudées identiques, composées l'une du premier tube(1), de la première demi-ailette (6) et de la troisième demi-ailette(4) et l'autre du second tube(2), de la seconde demi-ailette (7) et de la quatrième demi-ailette(5).

Par exemple, les tubes sont de diamètre extérieur 8mm et de diamètre intérieur 5mm pour une épaisseur de 1,5mm. Chaque demi-ailette est de largeur 46mm, pour une largeur de 100mm environ de chaque pièce extrudée et une épaisseur des demi-ailettes de 1,5mm. Les bords de demi-ailettes en regard sont de préférence jointifs. Comme pour le premier mode, la distance entre les tubes, ici deux fois 46mm pour des ailettes jointives, est choisie supérieure à dix fois la largeur d'un tube, ici 8mm.

Les mêmes variantes que dans le exemple peuvent être envisagées sur la forme des tubes et des demi-ailettes et le matériau les composant, qui est typiquement un métal apte à l'extrusion.

De plus, il est souhaitable de mettre en contact mécanique les bords en regard des demi-ailettes, pour maximiser la densité énergétique de stockage de l'accumulateur.

Pour ce mode, il pourrait être envisagé des demi-ailettes de largeur différentes.

Typiquement dans les modes décrits, le rapport des surfaces internes, supposées lisses, en contact avec le fluide frigorigène et des surfaces externes en contact avec le matériau à changement de phase est supérieur à 10. Ceci constitue une anisotropie inhabituelle dans l'art antérieur pour un tube muni d'ailettes latérales. Toutefois, malgré un tel rapport d'anisotropie, des simulations thermiques par des méthodes connues de l'art antérieur, montrent que 3 fois plus de chaleur est échangée via l'ailette ou les demi-ailettes, que via le tube, ce qui valide bien l'influence de l'ailette sur la prise en glace.

Pour tous les modes décrits, il sera possible d'utiliser les structures à tubes et à ailette ou demi-ailettes dans une machine frigorifique en tant qu'évaporateur, pour refroidir et solidifier, au moyen d'un fluide frigorigène s'évaporant dans les tubes, un matériau liquide, de préférence calme ou immobile, entourant les tubes et les ailettes ou demi-ailettes.

L'invention est susceptible d'application industrielle ou utile dans le domaine des accumulateurs thermiques, transférant de la chaleur entre deux matériaux à changement de phase et notamment pour stocker de l'énergie sous forme de glace d'eau douce ou d'eau salée ou saumâtre.

Dans toute la demande, l'apport d'une « frigorie » à un système thermodynamique sera défini comme le prélèvement d'une calorie à ce système thermodynamique.

## Revendications

1. Dispositif pour échanger de la chaleur de type accumulateur thermique, comprenant un premier tube (1) creux selon sa longueur et conducteur pour la chaleur, un second tube (2) creux selon sa longueur et conducteur pour la chaleur, et une ailette (3) conductrice pour la chaleur, dans lequel l'ailette (3) s'étend en longueur le long du premier tube (1), l'ailette (3) s'étend en longueur le long du second tube (2) et l'ailette (3) s'étend en largeur entre le premier tube (1) et le second tube (2), **caractérisé par le fait que** le dispositif comprend en outre de l'eau entourant le premier tube (1), le second tube (2) et l'ailette (3), et que l'ailette comprend une première demi-ailette (6) conductrice pour la chaleur, qui s'étend entre le premier tube (1) et un premier bord et une seconde demi-ailette (7), conductrice pour la chaleur, qui s'étend entre le second tube (2) et un second bord, l'ailette étant de largeur supérieure à dix fois la largeur d'un tube.

2. Dispositif selon la revendication 1, **caractérisé par le fait que** l'épaisseur de l'ailette (3) est inférieure à la largeur du premier tube (1) et est inférieure à la largeur du second tube (2).

3. Dispositif selon la revendication 1, **caractérisé par le fait que** l'ailette (3) est plane.

4. Dispositif selon la revendication 1, **caractérisé par le fait que** le premier tube (1) est parallèle au second tube (2).

5. Dispositif selon la revendication 1, **caractérisé par le fait que** le premier tube (1) est droit sur sa longueur et le second tube (2) est droit sur sa longueur.

6. Dispositif selon la revendication 1, **caractérisé par le fait que** le premier tube (1) est en aluminium, le second tube (2) est en aluminium et l'ailette (3) est en aluminium.

7. Dispositif selon la revendication 1, **caractérisé par le fait que** la seconde demi-ailette (7) s'étend en largeur entre la première demi-ailette (6) et le second tube (2).

8. Dispositif selon la revendication 1, **caractérisé par le fait que** le premier bord de la première demi-ailette (6) est en contact avec le second bord de la seconde demi-ailette (7).

9. Procédé pour échanger de la chaleur utilisant le dispositif de l'une des revendications 1 à 8, **caractérisé par le fait qu'**il comprend les étapes suivantes:
- évaporer dans le premier tube (1) et dans le second tube (2), un fluide frigorigène,
- solidifier l'eau sur le premier tube (1), sur le second tube (2) et sur l'ailette (3) .

10. Procédé selon la revendication 9, **caractérisé par le fait que** le fluide frigorigène a une température d'évaporation inférieure à la température de prise en glace de l'eau.

## Patentansprüche

1. - Vorrichtung zum Austauschen von Wärme vom Typ Wärmespeicher, umfassend ein erstes Rohr (1), das gemäß seiner Länge hohl und für die Wärme leitend ist, ein zweites Rohr (2), das gemäß seiner Länge hohl und für die Wärme leitend ist, und eine für die Wärme leitende Rippe (3), wobei sich die Rippe (3) der Länge nach entlang dem ersten Rohr (1) erstreckt, sich die Rippe (3) der Länge nach entlang dem zweiten Rohr (2) erstreckt und sich die Rippe (3) der Breite nach zwischen dem ersten Rohr (1) und dem zweiten Rohr (2) erstreckt, **dadurch gekennzeichnet, dass** die Vorrichtung ferner Wasser umfasst, das das erste Rohr (1), das zweite Rohr (2) und die Rippe (3) umgibt und dass die Rippe eine erste für die Wärme leitende halbe Rippe (6) umfasst, die sich zwischen dem ersten Rohr (1) und einem ersten Rand erstreckt und eine zweite für die Wärme leitende halbe Rippe (7), die sich zwischen dem zweiten Rohr (2) und einem zweiten Rand erstreckt, wobei die Rippe der Breite nach zehnmal größer als die Breite eines Rohrs ist.

2. - Vorrichtung nach Anspruch 1, **dadurch gekennzeichnet, dass** die Dicke der Rippe (3) kleiner als die Breite des ersten Rohrs (1) ist und kleiner als die Breite des zweiten Rohrs (2) ist.

3. - Vorrichtung nach Anspruch 1, **dadurch gekennzeichnet, dass** die Rippe (3) eben ist.

4. - Vorrichtung nach Anspruch 1, **dadurch gekennzeichnet, dass** das erste Rohr (1) parallel zum zweiten Rohr (2) ist.

5. - Vorrichtung nach Anspruch 1, **dadurch gekennzeichnet, dass** das erste Rohr (1) über seine Länge gerade ist und das zweite Rohr (2) über seine Länge gerade ist.

6. - Vorrichtung nach Anspruch 1, **dadurch gekennzeichnet, dass** das erste Rohr (1) aus Aluminium ist, das zweite Rohr (2) aus Aluminium ist und die Rippe (3) aus Aluminium ist.

7. - Vorrichtung nach Anspruch 1, **dadurch gekennzeichnet, dass** sich die zweite halbe Rippe (7) der Breite nach zwischen der ersten halben Rippe (6) und dem zweiten Rohr (2) erstreckt.

8. - Vorrichtung nach Anspruch 1, **dadurch gekennzeichnet, dass** der erste Rand der ersten halben Rippe (6) mit dem zweiten Rand der zweiten halben Rippe (7) im Kontakt ist.

9. - Verfahren zum Austauschen von Wärme, das die Vorrichtung von einem der Ansprüche 1 bis 8 verwendet, **dadurch gekennzeichnet, dass** es die folgenden Schritte umfasst:
- Verdampfen eines Kühlfluids im ersten Rohr (1) und im zweiten Rohr (2),
- Verfestigen des Wassers auf dem ersten Rohr (1), auf dem zweiten Rohr (2) und auf der Rippe (3).

10. - Verfahren nach Anspruch 9, **dadurch gekennzeichnet, dass** das Kühlfluid eine Verdampfungstemperatur unter der Vereisungstemperatur des Wassers hat.

## Claims

1. - A heat storage-type heat exchange device, comprising a first thermally conductive tube (1) that is hollow over its length, a second thermally conductive tube (2) that is hollow over its length, and a thermally conductive fin (3), wherein the fin (3) extends lengthwise along the first tube (1), the fin (3) extends lengthwise along the second tube (2) and the fin (3) extends width-wise between the first tube (1) and the second tube (2), **characterized in that** the device further comprises water surrounding the first tube (1), the second tube (2) and the fin (3), and **in that** the fin comprises a first thermally conductive half-fin (6), which extends between the first tube (1) and a first edge and a second thermally conductive half-fin (7), which extends between the second tube (2) and a second edge, the fin having a width higher than ten times the width of a tube.

2. - The device according to claim 1, **characterized in that** the thickness of the fin (3) is less than the width of the first tube (1) and is less than the width of the second tube (2).

3. - The device according to claim 1, **characterized in that** the fin (3) is flat.

4. - The device according to claim 1, **characterized in that** the first tube (1) is parallel to the second tube (2).

5. - The device according to claim 1, **characterized in that** the first tube (1) is straight over its length and the second tube (2) is straight over its length.

6. - The device according to claim 1, **characterized in that** the first tube (1) is made from aluminum, the second tube (2) is made from aluminum and the fin (3) is made from aluminum.

7. - The device according to claim 2, **characterized in that** the second half-fin (7) extends width-wise between the first half-fin (6) and the second tube (2).

8. - The device according to claim 2, **characterized in that** the first edge of the first half-fin (6) is in contact with the second edge of the second half-fin (7).

9. - A heat exchange method using the device according to one of claims 1 to 8, **characterized in that** it comprises the following steps:
- evaporating a refrigerant in the first tube (1) and in the second tube (2),
- solidifying the water on the first tube (1), on the second tube (2) and on the fin (3).

10. - The method according to claim 9, **characterized in that** the refrigerant has an evaporating temperature lower than the icing temperature of water.
